# EUROPÄISCHE PATENTANMELDUNG

(11) **EP 4 037 138 A1**
(43) Veröffentlichungstag der Anmeldung: **03.08.2022**
(21) Anmeldenummer: 21217778.6
(22) Anmeldetag: 27.12.2021
(51) Int. Cl.: H02J 7/00, B60L 50/60, H02M 7/483

(54) **BATTERIESYSTEM, VERFAHREN ZUM BETREIBEN EINES BATTERIESYSTEMS**

(30) Priorität: 01.02.2021 DE 102021200856
(71) Anmelder: Robert Bosch GmbH, 70442 Stuttgart (DE)
(72) Erfinder: Landa, Sven, 74336 Brackenheim (DE); Gleiter, Andreas, 70437 Stuttgart (DE); Oehl, Joachim, 71691 Freiberg Am Neckar (DE)

(57) **Zusammenfassung**

Die Erfindung betrifft ein Batteriesystem (10) mit mehreren Batteriemodulsträngen (2, 2a, 2b, 2c), die jeweils ein Batteriemodul (5), welches einen positiven Pol (22) und einen negativen Pol (21) aufweist, einen Ausgang (3), welcher ein positives Terminal (12) und ein negatives Terminal (11) aufweist, und eine Schalteinheit (60) zur elektrischen Verbindung des Batteriemoduls (5) mit dem Ausgang (3). Die Schalteinheit (60) weist ein erstes Schaltelement (61), ein zweites Schaltelement (62) und ein drittes Schaltelement (63) auf, wobei ein erster Anschluss des ersten Schaltelements (61) mit einem Knotenpunkt (25) verbunden ist, ein zweiter Anschluss des ersten Schaltelements (61) mit einem der Pole (21, 22) des Batteriemoduls (5) verbunden ist, ein erster Anschluss des zweiten Schaltelements (62) mit dem Knotenpunkt (25) verbunden ist, ein zweiter Anschluss des zweiten Schaltelements (62) mit einem der Terminals (11, 12) des Ausgangs (3) verbunden ist, ein erster Anschluss des dritten Schaltelements (63) mit dem anderen der Pole (21, 22) des Batteriemoduls (5) und mit dem anderen der Terminals (11, 12) des Ausgangs (3) verbunden ist, und ein zweiter Anschluss des dritten Schaltelements (63) mit dem Knotenpunkt (25) verbunden ist.

## Beschreibung

Die Erfindung betrifft ein Batteriesystem mit mehreren Batteriemodulsträngen, die jeweils ein Batteriemodul, welches einen positiven Pol und einen negativen Pol aufweist, einen Ausgang, welcher ein positives Terminal und ein negatives Terminal aufweist, und eine Schalteinheit zur elektrischen Verbindung des Batteriemoduls mit dem Ausgang. Die Erfindung betrifft auch ein Verfahren zum Betreiben eines erfindungsgemäßen Batteriesystems. Die Erfindung betrifft ferner ein Antriebssystem, welches mindestens eine elektrische Maschine und mindestens ein erfindungsgemäßes Batteriesystem aufweist, sowie ein Fahrzeug, welches mindestens ein erfindungsgemäßes Batteriesystem und/oder ein erfindungsgemäßes Antriebssystem aufweist.

### Stand der Technik

Konventionelle Kraftfahrzeuge weisen einen Antrieb auf, welcher üblicherweise einen Verbrennungsmotor umfasst. Ferner umfassen konventionelle Kraftfahrzeuge ein Batteriesystem zur Versorgung eines Anlassers und weiterer Verbraucher des Kraftfahrzeugs mit elektrischer Energie sowie einen Generator zum Laden des Batteriesystems. Elektrofahrzeuge weisen ein Batteriesystem zur Versorgung eines Traktionsmotors und weiterer Verbraucher mit elektrischer Energie auf.

Ein gattungsgemäßes Batteriesystem eines konventionellen Kraftfahrzeugs umfasst ein Batteriemodul mit mindestens einer, vorzugsweise mit mehreren Batteriezellen, die beispielsweise seriell verschaltet sind. Ein solches Batteriemodul weist eine Nominalspannung von beispielsweise 12 V, 24 V oder 48 V auf. Eine Ausgangsspannung eines Batteriesystems eines konventionellen Kraftfahrzeugs entspricht dabei der Nominalspannung des Batteriemoduls. Ein Batteriesystem eines Elektrofahrzeugs kann mehrere seriell verschaltete Batteriemodule umfassen und dadurch eine höhere Ausgangsspannung von beispielsweise 600 V aufweisen.

Ein gattungsgemäßes Batteriesystem umfasst ferner eine Schalteinheit zur elektrischen Verbindung des Batteriemoduls mit einem Ausgang des Batteriesystems. Mittels der Schalteinheit kann das Batteriesystem bzw. das Batteriemoduls elektrisch mit einem Bordnetz des Kraftfahrzeugs verbunden, sowie von dem Bordnetz getrennt werden.

Bei den Batteriezellen des Batteriemoduls handelt es sich beispielsweise um Lithium-Ionen-Batteriezellen.

Aus dem Dokument US 2019/0207605 A1 ist eine elektronische Schaltungsanordnung, insbesondere ein Halbleiterrelais, zur bidirektionalen elektronischen Leistungsschaltung bekannt, welche an einen Verbraucher und an eine elektrische Spannungsquelle anschließbar ist, aufweisend zwei Feldeffekttransistoren und eine Steuerungsschaltung, wobei die Steuerungsschaltung mit dem jeweiligen Gateanschluss der Feldeffekttransistoren leitungstechnisch verbunden ist, wobei die Feldeffekttransistoren anti-seriell geschaltet sind.

Das Dokument US 2015/0380776 A1 beschreibt ein Energiespeichermodul für eine Energiespeichereinrichtung, mit einem Energiespeicherzellenmodul, welches eine Speicherzellenserienschaltung aus mindestens zwei Energiespeicherzellen aufweist, einer Koppeleinrichtung mit einer Vielzahl von Koppelelementen, welche dazu ausgelegt ist, das Energiespeicherzellenmodul selektiv in einen Energieversorgungsstrang der Energiespeichereinrichtung zu schalten oder in diesem zu umgehen, und einem Treibermodul, welches dazu ausgelegt ist, Treibersignale für die Vielzahl von Koppelelementen zu erzeugen.

### Offenbarung der Erfindung

Es wird ein Batteriesystem vorgeschlagen. Das Batteriesystem umfasst dabei mehreren Batteriemodulsträngen, die jeweils ein Batteriemodul, welches einen positiven Pol und einen negativen Pol aufweist, einen Ausgang, welcher ein positives Terminal und ein negatives Terminal aufweist, und eine Schalteinheit zur elektrischen Verbindung des Batteriemoduls mit dem Ausgang. Vorzugsweise sind die mehreren Batteriemodulstränge parallel verschaltet. Denkbar ist aber auch, dass die mehreren Batteriemodulstränge seriell verschaltet sind. Beispielsweise können die negativen Terminals der jeweiligen Batteriemodulstränge miteinander verbunden sein, während die positiven Terminals der jeweiligen Batteriemodulstränge jeweils als ein Batteriesystemausgangsanschluss ausgebildet sind.

Das Batteriemodul kann dabei jeweils eine oder mehrere Batteriezellen umfassen, die parallel und/oder serielle miteinander verschaltet sind. Bei der Batteriezelle handelt es sich bevorzugt um Lithium-Ionen-Batteriezelle.

Mittels der Schalteinheit kann das Batteriemodul elektrisch mit dem Ausgang verbunden, sowie von dem Ausgang getrennt werden.

Erfindungsgemäß weist die Schalteinheit ein erstes Schaltelement, ein zweites Schaltelement und ein drittes Schaltelement auf. Die Schaltelemente weisen jeweils drei Anschlüsse auf, wobei zwischen einem ersten Anschluss und einem zweiten Anschluss eine Schaltstrecke gebildet ist, welche mittels eines dritten Anschlusses ansteuerbar ist.

Dabei ist ein erster Anschluss des ersten Schaltelements mit einem Knotenpunkt verbunden, und ein zweiter Anschluss des ersten Schaltelements ist mit einem der Pole des Batteriemoduls verbunden. Ein erster Anschluss des zweiten Schaltelements ist mit dem Knotenpunkt verbunden, und ein zweiter Anschluss des zweiten Schaltelements ist mit einem der Terminals des Ausgangs verbunden. Ein erster Anschluss des dritten Schaltelements ist mit dem anderen der Pole des Batteriemoduls und mit dem anderen der Terminals des Ausgangs verbunden, und ein zweiter Anschluss des dritten Schaltelements ist mit dem Knotenpunkt verbunden.

Beispielsweise ist der zweite Anschluss des ersten Schaltelements mit dem positiven Pol des Batteriemoduls verbunden, und der zweite Anschluss des zweiten Schaltelements ist mit dem positiven Terminal des Ausgangs verbunden. Der erste Anschluss des dritten Schaltelements ist dann mit dem negativen Pol des Batteriemoduls und mit dem negativen Terminal des Ausgangs verbunden. Der negative Pol des Batteriemoduls ist dabei mit dem negativen Terminal des Ausgangs fest verbunden.

Die erfindungsgemäße Verschaltung der Schaltelemente der Schalteinheit ermöglicht mehrere Schaltzustände der jeweiligen Batteriemodulstränge. Beispielsweise kann in einem ersten Schaltzustand das erste Schaltelement geschlossen, das zweite Schaltelement geöffnet und das dritte Schaltelement geschlossen sein. In einem zweiten Schaltzustand kann das erste Schaltelement geschlossen, das zweite Schaltelement geschlossen und das dritte Schaltelement geöffnet sein. In einem dritten Schaltzustand kann das erste Schaltelement geöffnet, das zweite Schaltelement geschlossen und das dritte Schaltelement geschlossen sein. In einem vierten Schaltzustand kann das erste Schaltelement geöffnet und das dritte Schaltelement geöffnet sein.

Vorzugsweise sind die mehreren Batteriemodulstränge dazu eingerichtet, eine gegenüber den jeweils anderen Batteriemodulsträngen phasenversetzte Wechselspannung zu erzeugen.

Vorzugsweise umfasst das erfindungsgemäß vorgeschlagene Batteriesystem drei Batteriemodulstränge. Bevorzugt sind die drei Batteriemodulstränge dazu eingerichtet, eine gegenüber den jeweils anderen Batteriemodulsträngen phasenversetzte Wechselspannung zu erzeugen. Die Phasendifferenz zwischen der phasenversetzten Wechselspannung beträgt dabei vorzugsweise jeweils 120°. Das Batteriesystem dieser Ausführungsform der Erfindung kann ohne weitere Schaltmaßnahmen zur Bereitstellung eines so genannten 3-Phasen-Netzes und zum direkten Anschluss an eine dreiphasige elektrische Maschine verwendet werden.

Vorzugsweise ist die Schalteinheit fest in dem Batteriemodul verbaut. Alternativ kann die Schalteinheit auch als ein separater Adapter ausgebildet sein, der an die jeweiligen Batteriemodule bzw. die jeweiligen Batteriemodulstränge angeschlossen werden kann.

Vorzugsweise weisen das erste Schaltelement, das zweite Schaltelement und das dritte Schaltelement der beiden Schalteinheiten jeweils eine Schaltstrecke sowie eine parallel zu der Schaltstrecke geschaltete Inversdiode, welche auch als Body-Diode bezeichnet wird, auf.

Das erste Schaltelement, das zweite Schaltelement und das dritte Schaltelement sind bevorzugt als Halbleiter ausgebildet. Die Wahl der Halbleitertechnologie ist dabei beliebig. Dabei kann die Silizium-Carbid- oder Gallium-Nitrid-Technologie verwendet werden.

Gemäß einer bevorzugten Ausgestaltung der Erfindung sind das erste Schaltelement, das zweite Schaltelement und das dritte Schaltelement als Feldeffekttransistoren (FETs) ausgebildet und weisen jeweils einen SOURCE-Anschluss, einen DRAIN-Anschluss und einen GATE-Anschluss auf. Die Schaltelemente können derart verschaltet sein, dass jeweils der erste Anschluss der SOURCE-Anschluss, der zweite Anschluss der DRAIN-Anschluss und der dritte Anschluss der GATE-Anschluss ist. Beispielsweise handelt es sich bei den Schaltelementen um MOSFETs, insbesondere um n-Kanal-MOSFETs vom Anreicherungstyp. Bei p-Kanal-FETs sind die Schaltelemente derart verschaltet, dass jeweils der erste Anschluss der DRAIN-Anschluss, der zweite Anschluss der SOURCE-Anschluss und der dritte Anschluss der GATE-Anschluss ist.

Alternativ können das erste Schaltelement, das zweite Schaltelement und das dritte Schaltelement als IGBTs (engl.: insulated-gate bipolar transistor) ausgebildet und weisen jeweils einen Kollektor-Anschluss, einen Emitter-Anschluss und einen GATE-Anschluss auf. Die Schaltelemente können derart verschaltet sein, dass jeweils der erste Anschluss der Emitter-Anschluss, der zweite Anschluss der Kollektor-Anschluss und der dritte Anschluss der GATE-Anschluss ist. Vorzugsweise umfassen das erste Schaltelement, das zweite Schaltelement und das dritte Schaltelement jeweils eine zusätzliche Inversdiode.

Es wird auch ein Verfahren zum Betreiben des erfindungsgemäßen Batteriesystems vorgeschlagen. Dabei wird eine mehrphasige Wechselspannung erzeugt. Die Schalteinheiten werden dabei jeweils derart angesteuert, dass eine gegenüber den jeweils anderen Batteriemodulsträngen versetzte Phase der mehrphasigen Wechselspannung erzeugt wird. Vorzugsweise wird eine dreiphasige Wechselspannung erzeugt. Die Phasendifferenz zwischen der phasenversetzten Wechselspannung beträgt dabei vorzugsweise jeweils 120°. Das Batteriesystem dieser Ausführungsform der Erfindung kann ohne weitere Schaltmaßnahmen zur Bereitstellung eines so genannten 3-Phasen-Netzes und zum direkten Anschluss an eine dreiphasige elektrische Maschine verwendet werden.

Vorzugsweise werden die Schalteinheiten derart angesteuert, dass das zweite Schaltelement während der Ansteuerung der Schalteinheit geschlossen ist.

Es wird ferner ein Antriebssystem vorgeschlagen, das mindestens eine elektrische Maschine und mindestens ein erfindungsgemäßes Batteriesystem umfasst.

Vorzugsweise ist die mindestens eine elektrische Maschine eine mehrphasige, elektrische Maschine. Dabei umfasst das Batteriesystem mindestens so viele Batteriemodulstränge wie Phasen der elektrischen Maschine. Bevorzugt ist die mindestens eine elektrische Maschine als eine dreiphasige elektrische Maschine ausgebildet.

Ferner wird auch ein Fahrzeug vorgeschlagen, das mindestens ein erfindungsgemäßes Batteriesystem und/oder ein erfindungsgemäßes Antriebssystem umfasst.

### Vorteile der Erfindung

Bei dem erfindungsgemäß vorgeschlagenen Batteriesystem kann die Funktion des im Stand der Technik üblichen Pulswechselrichters in das Batteriesystem integriert werden, welche direkt mit einer elektrischen Maschine oder einer sonstigen elektrischen Anordnung, welche auf den Betrieb mit einer Wechselspannung ausgelegt ist, angeschlossen werden kann. Eine gesamte Leistungselektronik, also der Inverter sowie ein Pufferkondensator gemeinsam mit dem Gleichspannungszwischenkreis, kann somit entfallen.

Das erfindungsgemäß vorgeschlagene Batteriesystem kann besonders vorteilhaft beispielsweise zur Drehzahlkontrolle eines an das Batteriesystem angeschlossenen Elektromotors wie des Antriebsmotors eines Elektro- oder Hybridfahrzeuges eingesetzt werden.

### Kurze Beschreibung der Zeichnungen

Ausführungsformen der Erfindung werden anhand der Zeichnungen und der nachfolgenden Beschreibung näher erläutert.

Es zeigen:
- Figur 1: ein Batteriesystem gemäß dem Stand der Technik,
- Figur 2: eine schematische Darstellung eines Batteriemodulstrangs des erfindungsgemäß vorgeschlagenen Batteriesystems,
- Figur 3: eine schematische Darstellung eines erfindungsgemäß vorgeschlagenen Antriebssystems und
- Figur 4: eine vereinfachte Schaltung des erfindungsgemäß vorgeschlagenen Antriebssystems während dessen Betriebs.

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

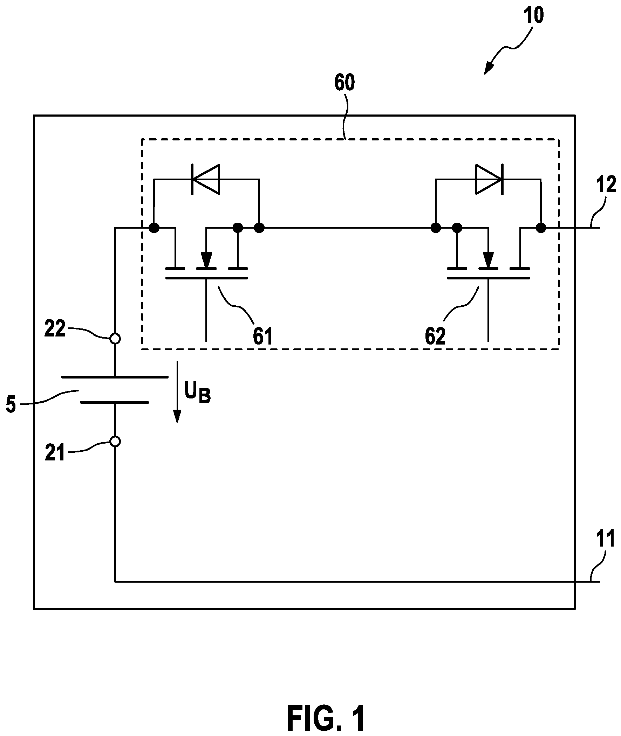

Figur 1 zeigt ein Batteriesystem 10 gemäß dem Stand der Technik. Dabei umfasst das Batteriesystem 10 ein Batteriemodul 5, das einen positiven Pol 22 und einen negativen Pol 21 aufweist, einer Schalteinheit 60, ein positives Terminal 12 und ein negatives Terminal 11. Die Schalteinheit 60 dient dabei zur elektrischen Verbindung des positiven Pols 22 des Batteriemoduls 5 mit dem positiven Terminals 12. Die Schalteinheit 60 umfasst dabei ein erstes Schaltelement 61 und ein zweites Schaltelement 62. Im Leerlauf liegt eine Batteriespannung UB zwischen dem positiven Pol 22 und dem negativen Pol 21 an. Das erste und das zweite Schaltelement 61, 62 weisen jeweils einen ersten Anschluss, einen zweiten Anschluss und einen dritten Anschluss auf.

In der Figur 1 sind das erste und das zweite Schaltelement 61, 62 jeweils als ein n-Kanal-MOSFET ausgebildet. Dabei ist der erste Anschluss ein SOURCE-Anschluss, der zweite Anschluss ein DRAIN-Anschluss und der dritte Anschluss ein GATE-Anschluss. Das erste und das zweite Schaltelement 61, 62 sind dabei anti-seriell geschaltet. Unter einer "anti-seriellen Schaltung" wird verstanden, dass zwei Bauteile in entgegengesetzter Polung, wie beispielsweise eine Zenerdiode, in Reihe geschaltet sind. Eine solche Schalteinheit 60 ist notwendig, um in beide Stromflussrichtungen zu sperren.

Vorliegend in der Darstellung gemäß Figur 1 ist ein erster Anschluss des ersten Schaltelements 61 elektrisch mit einem ersten Anschluss des zweiten Schaltelements 62 verbunden, während ein zweiter Anschluss des ersten Schaltelements 61 elektrisch mit dem positiven Pol 22 des Batteriemodul 5 verbunden ist und ein zweiter Anschluss des zweiten Schaltelements 62 ist elektrisch mit dem positiven Terminals 12 verbunden. Dabei ist der negative Pol 21 des Batteriemoduls 5 elektrisch mit dem negativen Terminal 11 verbunden.

### Ausführungsformen der Erfindung

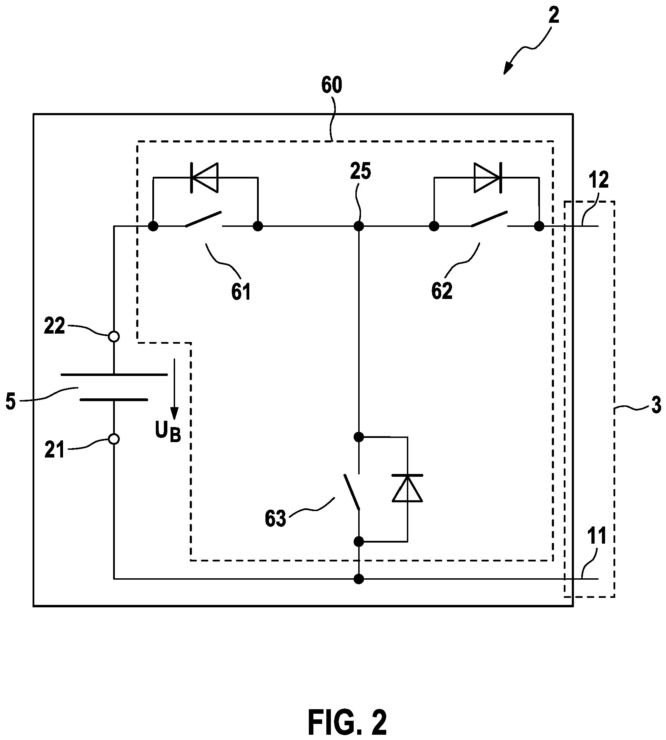

Figur 2 zeigt eine schematische Darstellung eines Batteriemodulstrangs 2 eines erfindungsgemäß vorgeschlagenen Batteriesystems 10. Der Batteriemodulstrang 2 umfasst ein Batteriemodul 5, einen Ausgang 3 und eine Schalteinheit 60. Die Schalteinheit 60 dient zur elektrischen Verbindung des Batteriemoduls 5 mit dem Ausgang 3.

Das Batteriemodul 5 umfasst mehrere hier nicht dargestellte Batteriezellen, die innerhalb des Batteriemoduls 5 sowohl seriell als auch parallel miteinander verschaltetet sein können.

Das Batteriemodul 5 weist ferner einen positiven Pol 22 und einen negativen Pol 21 auf. Im Leerlauf liegt eine Batteriespannung UB zwischen dem positiven Pol 22 und dem negativen Pol 21 an. Der Ausgang 3 weist dabei ein positives Terminal 12 und ein negatives Terminal 11 auf.

Die Schalteinheit 60 weist ein erstes Schaltelement 61, ein zweites Schaltelement 62 und ein drittes Schaltelement 63 auf. Die Schaltelemente 61, 62, 63 weisen jeweils drei Anschlüsse auf, wobei zwischen einem ersten Anschluss und einem zweiten Anschluss eine Schaltstrecke gebildet ist, welche mittels eines dritten Anschlusses ansteuerbar ist.

Das erste Schaltelement 61, das zweite Schaltelement 62 und das dritte Schaltelement 63 sind vorliegend als Feldeffekttransistoren ausgebildet. Die Schaltelemente 61, 62, 63 weisen jeweils einen SOURCE-Anschluss, einen DRAIN-Anschluss und einen GATE-Anschluss auf. Die Schaltelemente 61, 62, 63 sind derart verschaltet, dass jeweils der erste Anschluss der SOURCE-Anschluss, der zweite Anschluss der DRAIN-Anschluss und der dritte Anschluss der GATE-Anschluss ist.

Bei den Schaltelementen 61, 62, 63 handelt es sich vorliegend um n-Kanal-MOSFETs vom Anreicherungstyp. Die Schaltelemente 61, 62, 63 weisen jeweils eine Schaltstrecke sowie eine parallel zu der Schaltstrecke geschaltete Inversdiode auf. Die Inversdiode, welche auch als Body-Diode bezeichnet wird, entsteht in jedem MOSFET aufgrund von dessen interner Struktur und ist kein explizites Bauteil.

Der erste Anschluss des ersten Schaltelements 61 ist mit einem Knotenpunkt 25 verbunden. Ein zweiter Anschluss des ersten Schaltelements 61 ist mit dem positiven Pol 22 des Batteriemoduls 5 verbunden. Ein erster Anschluss des zweiten Schaltelements 62 ist mit dem Knotenpunkt 25 verbunden. Ein zweiter Anschluss des zweiten Schaltelements 62 ist mit dem positiven Terminal 12 des Ausgangs 3 verbunden. Ein erster Anschluss des dritten Schaltelements 63 ist mit dem negativen Pol 21 des Batteriemoduls 5 und mit dem negativen Terminal 11 des Ausgangs 3 verbunden. Ein zweiter Anschluss des dritten Schaltelements 63 ist mit dem Knotenpunkt 25 verbunden.

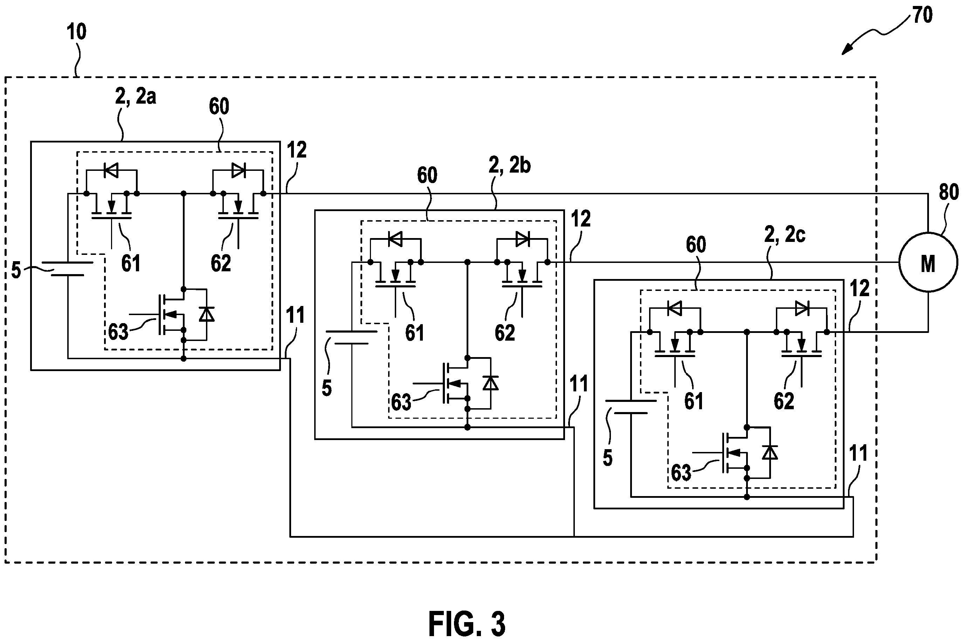

Figur 3 zeigt eine schematische Darstellung eines erfindungsgemäß vorgeschlagenen Antriebssystems 70, das eine elektrische Maschine 80 und ein erfindungsgemäß vorgeschlagenes Batteriesystem 10 umfasst.

Vorliegend in Figur 3 ist das Batteriesystem 10 dreiphasig ausgebildet und umfasst dabei drei Batteriemodulstränge 2, und zwar einen ersten Batteriemodulstrang 2a, einen zweiten Batteriemodulstrang 2b sowie einen dritten Batteriemodulstrang 2c, die jeweils wie in Figur 2 dargestellt ausgebildet sind. In Figur 3 sind die drei Batteriemodulstränge 2a, 2b, 2c parallel verschaltet. Selbstverständlich kann das Batteriesystem 10 auch zwei oder mehr als drei Batteriemodulstränge 2 aufweisen. Dabei ist die elektrische Maschine 80 eine dreiphasige elektrische Maschine 80.

Dabei werden die Schalteinheiten 60 derart angesteuert, dass eine gegenüber den jeweils anderen Batteriemodulsträngen 2 phasenversetzte, dreiphasige Wechselspannung erzeugt wird. Die Phasendifferenz zwischen der phasenversetzten Wechselspannung beträgt dabei jeweils 120°. Das Batteriesystem 10 dieser Ausführungsform der Erfindung kann ohne weitere Schaltmaßnahmen zur Bereitstellung eines so genannten 3-Phasen-Netzes und zum direkten Anschluss an die dreiphasige elektrische Maschine 80 verwendet werden.

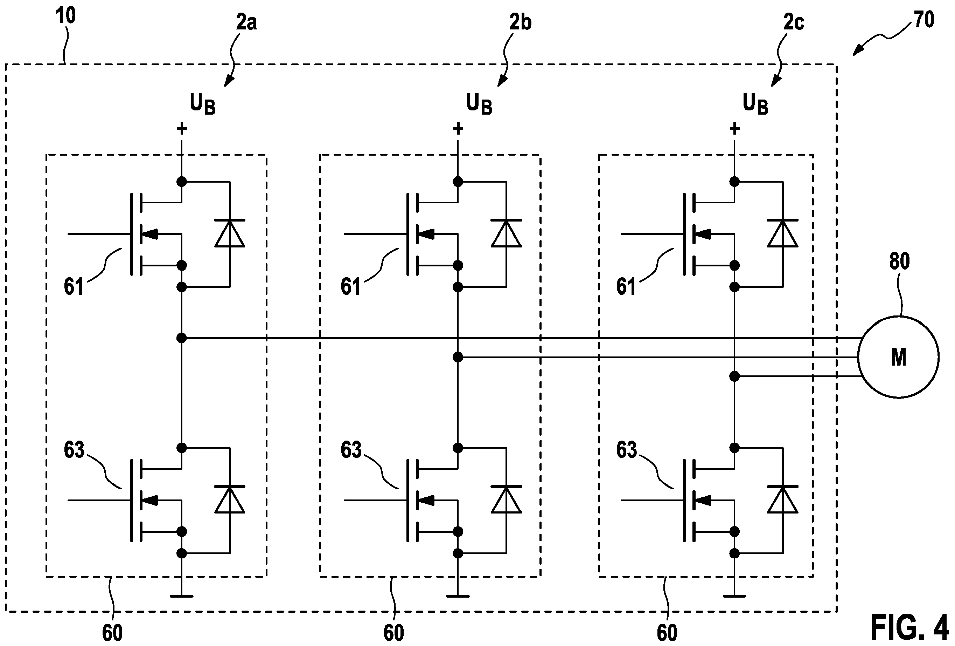

Figur 4 stellt eine vereinfachte Schaltung des in Figur 3 gezeigten Antriebssystems 70 während dessen Betriebs schematisch dar.

Wie in Figur 4 dargestellt wird, werden die Schalteinheiten 60 dabei derart angesteuert, dass das zweite Schaltelement 62 während der Ansteuerung der Schalteinheit 60 geschlossen ist. Zur Vereinfachung des in Figur 3 dargestellten Antriebssystems 70 sind hierbei in Figur 4 die Batteriemodule 5, die jeweils eine Batteriespannung UB aufweist, und die geschlossenen zweiten Schaltelemente 62 nicht dargestellt.

Beim Betrachten des ersten und des dritten Schaltelements 61, 63 entsteht dadurch eine Inverter-Funktion mit einer sogenannten B6-Brücke-Topologie und dabei ist das zweite Schaltelement 62 lediglich für die Abschaltfunktion des Batteriemoduls 5 erforderlich. Somit kann die dreiphasige elektrische Maschine 80 direkt angesteuert werden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Batteriesystem (10) mit mehreren Batteriemodulsträngen (2, 2a, 2b, 2c), die jeweils ein Batteriemodul (5), welches einen positiven Pol (22) und einen negativen Pol (21) aufweist, einem Ausgang (3), welcher ein positives Terminal (12) und ein negatives Terminal (11) aufweist, und einer Schalteinheit (60) zur elektrischen Verbindung des Batteriemoduls (5) mit dem Ausgang (3),
**dadurch gekennzeichnet, dass**
die Schalteinheit (60) ein erstes Schaltelement (61), ein zweites Schaltelement (62) und ein drittes Schaltelement (63) aufweist, wobei ein erster Anschluss des ersten Schaltelements (61) mit einem Knotenpunkt (25) verbunden ist,
ein zweiter Anschluss des ersten Schaltelements (61) mit einem der Pole (21, 22) des Batteriemoduls (5) verbunden ist,
ein erster Anschluss des zweiten Schaltelements (62) mit dem Knotenpunkt (25) verbunden ist,
ein zweiter Anschluss des zweiten Schaltelements (62) mit einem der Terminals (11, 12) des Ausgangs (3) verbunden ist,
ein erster Anschluss des dritten Schaltelements (63) mit dem anderen der Pole (21, 22) des Batteriemoduls (5) und mit dem anderen der Terminals (11, 12) des Ausgangs (3) verbunden ist, und
ein zweiter Anschluss des dritten Schaltelements (63) mit dem Knotenpunkt (25) verbunden ist.

2. Batteriesystem (10) nach Anspruch 1, umfassend drei Batteriemodulstränge (2, 2a, 2b, 2c).

3. Batteriesystem (10) nach Anspruch 1 oder 2, **dadurch gekennzeichnet, dass**
die Schalteinheit (60) fest in dem Batteriemodul (5) verbaut oder als ein separater Adapter ausgebildet ist.

4. Batteriesystem (10) nach einem der Ansprüche 1 bis 3, **dadurch gekennzeichnet, dass**
das erste Schaltelement (61), das zweite Schaltelement (62) und das dritte Schaltelement (63) als Halbleiterschalter ausgebildet sind.

5. Verfahren zum Betreiben eines Batteriesystems (10) nach einem der Ansprüche 1 bis 4, **dadurch gekennzeichnet, dass** eine mehrphasige Wechselspannung erzeugt wird, wobei die Schalteinheiten (60) jeweils derart angesteuert werden, dass eine gegenüber den jeweils anderen Batteriemodulsträngen (2, 2a, 2b, 2c) versetzte Phase der mehrphasigen Wechselspannung erzeugt wird.

6. Verfahren nach Anspruch 5, **dadurch gekennzeichnet, dass** die Schalteinheiten (60) derart angesteuert werden, dass das zweite Schaltelement (62) der jeweiligen Schalteinheiten (60) während der Ansteuerung geschlossen ist.

7. Verfahren nach Anspruch 5 oder 6, **dadurch gekennzeichnet, dass** eine dreiphasige Wechselspannung erzeugt wird.

8. Antriebssystem (70), das mindestens eine elektrische Maschine (80) und mindestens ein Batteriesystem (10) nach einem der Ansprüche 1 bis 4 umfasst.

9. Antriebssystem (70) nach Anspruch 8, **dadurch gekennzeichnet, dass** die mindestens eine elektrische Maschine (80) eine mehrphasige elektrische Maschine (80) ist.

10. Fahrzeug, das mindestens ein Batteriesystem (10) nach einem der Ansprüche 1 bis 4 und/oder ein Antriebssystem (70) nach Anspruch 8 oder 9 umfasst.
